# EUROPÄISCHE PATENTSCHRIFT

(11) **EP 2 534 466 B1**
(45) Veröffentlichungstag und Bekanntmachung des Hinweises auf die Patenterteilung: **11.04.2018**
(21) Anmeldenummer: 11716464.0
(22) Anmeldetag: 10.02.2011
(51) Int. Cl.: G01N 3/32, G01N 27/20, G01M 5/00

(54) **SENSORSYSTEM ZUR BESTIMMUNG DER ERMÜDUNG AN METALLISCHEN BAUTEILEN**
SENSING SYSTEM FOR DETERMINING THE FATIGUE ON METAL COMPONENTS
SYSTÈME DE DÉTECTION POUR DÉTERMINER LA FATIGUE DE PIÈCES DE CONSTRUCTION MÉTALLIQUES

(30) Priorität: 12.02.2010 DE 102010008397
(43) Veröffentlichungstag der Anmeldung: 19.12.2012
(73) Patentinhaber: Fraunhofer-Gesellschaft zur Förderung der angewandten Forschung e.V., 80686 München (DE); Zasimchuck, Elena, 03680 Kiev (UA); Gordienko, Yuri, 03680 Kiev (UA)
(72) Erfinder: ZASIMCHUCK, Elena, 03680 Kiev (UA); GORDIENKO, Yuri, 03680 Kiev (UA); SCHREIBER, Jürgen, 01189 Dresden (DE)
(74) Vertreter: Pfenning, Meinig & Partner mbB
(86) Internationale Anmeldenummer: PCT/DE2011/000154
(87) Internationale Veröffentlichungsnummer: WO 2011/098079

(56) Entgegenhaltungen:
- EP-A2- 0 895 073
- DE-A1- 2 749 836
- US-A- 3 272 003
- US-A1- 2007 261 493
- PROTASOV A G ET AL: "Multilayer Thin Film Sensors for Damage Diagnostics", AIP CONFERENCE PROCEEDINGS, Bd. 820, Nr. 1, 6. März 2006 (2006-03-06), Seiten 930-937, XP55003692, ISSN: 0094-243X, DOI: 10.1063/1.2184625

## Beschreibung

Die Erfindung betrifft ein Sensorsystem zur Bestimmung der Ermüdung an metallischen Bauteilen. Dabei kann eine solche Bestimmung und Überwachung während des Betriebes solcher Bauteile aber auch bei bzw. nach der Herstellung, ohne eine Zerstörung und in eingebautem Zustand durchgeführt werden. Außerdem kann eine Bewertung des momentanen Zustandes auch nach einer erheblichen Anzahl von Lastwechseln durchgeführt werden.

Für eine zerstörungsfreie Bestimmung sind bisher die verschiedensten Messverfahren eingesetzt worden. Viele davon können aber nur mit sehr großem Aufwand, nur bei Einhaltung bestimmter Umgebungsbedingungen (Vakuum), nicht über längere Zeiträume oder auch nicht oder nur schwer elektronisch erfass- und auswertbar durchgeführt werden. Häufig ist dies auch lokal begrenzt möglich und ein mobiler Einsatz, beispielsweise an Fahrzeugen nicht möglich.

So ist es von E. E. Zasimchuk u.a. aus "Equidimensional Fractal Maps for Indirect Estimation of Deformation Damage in Nonuniform Aircraft Alloys"; Journal of Materials Engeneering and Performance; Vol. 12(1) Februar 2003; S. 68 bis 76 bekannt, Sensorelemente aus einkristallinem Aluminium auf eine Oberfläche von Bauteilen aufzukleben und die Veränderung der Oberflächentopografie auszuwerten. Dies kann optisch oder auch durch Röntgenanalyse erfolgen.

Das muss aber unter Laborbedingungen erfolgen und ein mobiler Einsatz für eine on-line Bestimmung ist nicht möglich. Außerdem kann keine kontinuierliche Bestimmung über längere Zeiträume oder auch in Echtzeit durchgeführt werden. Die Auswertung der optisch erfassten Veränderungen der Oberflächentopografie ist aufwendig. Die normalen Umgebungsbedingungen des Bauteils liegen bei extra Untersuchungen unter Laborbedingungen nicht vor.

Von PROTASOV A G et al. ist in "Multilayer Thin Film Sensors for Damage Diagnostics", AIP CONFERENCE PRO-CEEDINGS, Bd. 820, Nr. 1, 6. März 2006, Seiten 930-937, XP55003692, ISSN 00924-243X ein Sensorsystem zur Bestimmung der Ermüdung von Bauteilen mit einem mehrschichtigen Aufbau, das an ein einem Bauteil befestigt ist, beschrieben.

EP 0 895 073 A2 betrifft die Verwendung einer resistiven Schicht bei der Materialprüfung.

Ein Sensorsystem zur Bestimmung der Ermüdung an metallischen Bauteilen, das ebenfalls einen mehrschichtigen Aufbau hat, ist aus US 3,272,003 A bekannt.

Die DE 27 49 836 A1 betrifft die zerstörungsfreie Prüfung von Bauteilen. Dabei soll ein Metallstreifen auf der Oberfläche eines Bauteils innig befestigt sein. Der Metallstreifen soll aus einem Werkstoff mit kleiner kritischer Schubspannung bestehen und auf seiner freiliegenden Oberfläche zu Beginn der Wechselbeanspruchung ein hohes Reflexionsvermögen aufweisen.

Es ist daher Aufgabe der Erfindung ein Sensorsystem zur zerstörungsfreien Bestimmung der Ermüdung an metallischen Bauteilen zur Verfügung zu stellen, das flexibel einsetzbar ist.

Erfindungsgemäß wird diese Aufgabe mit einem Sensorsystem, das die Merkmale des Anspruchs 1 aufweist, gelöst. Vorteilhafte Ausgestaltungen und Weiterbildungen der Erfindung können mit in untergeordneten Ansprüchen bezeichneten Merkmalen erreicht werden.

Am erfindungsgemäßen Sensorsystem ist ein mehrschichtiger Aufbau vorhanden. Unmittelbar auf einer Oberfläche eines metallischen Bauteils ist eine erste Schicht, die aus einem einkristallinen Metall gebildet ist, auf der Oberfläche vollflächig befestigt. Auf der ersten Schicht ist eine aus einem elektrisch isolierenden Polymer gebildete zweite Schicht ausgebildet. Auf der zweiten Schicht befindet sich dann eine dritte Schicht. In der dritten Schicht sind sensitive oder Sensorelemente enthalten.

Oberhalb der dritten Schicht können Kontakte zu in dieser Schicht eingebetteten Sensorelementen sowie Anschlusskontakte für eine externe Messsignalerfassung und -auswertung ausgebildet sein. Dabei können Messsignale oder auch Steuersignale für in der dritten Schicht enthaltene sensitive oder Sensorelemente an bzw. von einer elektronische(n) Auswerte- und Steuereinheit übertragen werden. Dies kann im mobilen Einsatz beispielsweise ein Bordcomputer sein.

Die erste Schicht sollte aus einkristallinem Metall gebildet sein. Dies kann Aluminium oder das jeweilige Metall, aus dem das Bauteil hergestellt worden ist, sein. Sie kann beispielsweise auf die Oberfläche des Bauteils aufgeklebt, in Dünnschichttechnik (z.B. Sputtern) oder anderweitig stoffschlüssig mit der Oberfläche verbunden sein. Dabei sollte ein vollflächiger Verbund eingehalten sein.

Die zweite Schicht hat neben ihrer Funktion als elektrischer Isolator auch die Aufgabe einen bestimmten vorgegeben Abstand zwischen erster und dritter Schicht einzuhalten.

Die in der dritten Schicht enthaltenen sensitiven oder Sensorelemente sollten extern ansteuerbar sein, wofür die bereits erwähnten Kontakte genutzt werden können. Dadurch kann beispielsweise eine differenzierte Aktivierung oder auch ein gezieltes Auslesen von Messsignalen einzelner solcher Elemente erreicht werden. Mehrere solcher Elemente können dabei lokal differenziert und in definierter Form in der dritten Schicht angeordnet und über die Fläche verteilt sein.

Die dritte Schicht kann mit einer aus unterschiedlichen elektrisch leitenden oder halbleitenden Polymeren gebildeten Matrix gebildet sein. Geeignete auch dotierte Polymere sind, beispielsweise Polypyrrol, Polyanilin (PANI), Polythiophen oder Poly(para-phenylen-vinylen) (PPP).

Bei der Erfindung einsetzbare sensitive Elemente oder Sensorelemente sind z.B. Wirbelstromsensoren, kapazitive Sensoren, induktive Sensoren, Wandler, detektierende Sensoren für Ultraschalloberflächenwellen, optische Sensoren oder piezoelektrische Sensoren. Dabei kann lediglich ein Sensortyp in einer dritten Schicht enthalten sein. Es besteht aber auch die Möglichkeit unterschiedliche Sensoren in einem Sensorsystem einzusetzen.

Wirbelstromsensoren können vorteilhaft Wirbelstromfoliensensoren sein. Kapazitive Sensoren sollten in Form eines über Kontakte ansteuerbaren aus Leiterbahnen gebildeten Gitters ausgebildet sein. Dadurch können mehrere Achsen berücksichtigt werden, in denen Kräfte oder Momente auf Sensorsystem und Bauteil wirken. Ein oder mehrere kapazitive Sensoren sollten möglichst in einem elastisch verformbaren Polymer eingebettet sein.

Mit piezosensitiven Elementen oder Piezofasern, die einen Sensor bilden, kann eine Signalmodulation durchgeführt werden.

Optisch kann eine Detektion mit einem Bündel optischer Fasern, als Sensorelement, durchgeführt werden. Dabei können Stirnflächen der optischen Fasern auf die Oberfläche der ersten Schicht, zur Erfassung der jeweiligen lokalen Lichtstreuung gerichtet sein. Diese kann sich bei Kraft- oder Momenteinwirkung auf das Bauteil verändern. Durch die Veränderung der Oberflächentopografie verändert sich auch die Lichtstreuung an der Oberfläche.

Mit dem erfindungsgemäßen Sensorsystem kann auch in Echtzeit die Werkstoffschädigung oder die Ermüdung orts- und zeitaufgelöst bestimmt werden. Die Restlebensdauer kann zumindest abgeschätzt werden.

Es können Schädigungen am Bauteil lokalisiert und auch deren Entwicklung detektiert werden. Außerdem kann eine vergleichende Ermüdungsanalyse durchgeführt werden.

Obwohl ein Mehrschichtaufbau vorgesehen ist, kann ein Sensorsystem sehr dünn ausgebildet sein und eine Gesamtdicke von maximal 0,5 mm aufweisen. Die Eigenmasse ist auch sehr klein, so dass eine massebedingt auftretende Beeinflussung vernachlässigt werden kann.

Das einkristalline Metall, mit dem die erste Schicht gebildet ist, kann auch an in komplexer Form geometrisch konturierte Oberflächen angepasst werden und ist hoch sensitiv, da sie permanent dem Einfluss von ggf. auftretenden Deformationen des darunter angeordneten Bereichs der Bauteiloberfläche ausgesetzt ist.

Wie bereits angesprochen können in Echtzeit unter normalen Einsatzbedingungen Langzeituntersuchungen bzgl. der Ermüdung an metallischen Bauteilen durchgeführt und dabei Defekte und deren Entstehung sowie deren Verhalten erkannt werden. Dabei kann die räumliche Verteilung und die Richtung von Defekten erkannt werden. Dies kann gestützt auf eine mehrskalige Analyse des geschädigten Werkstoffs mit einem Sensorsystem erreicht werden.

Mit den ermittelten Messergebnissen können statistische Auswertungen und auch eine Optimierung bei der Entwicklung und Konstruktion von Bauteilen oder sogar Aggregaten in denen die Bauteile montiert sein können vorgenommen werden. Dabei können gezielt besonders geeignete Werkstoffe geprüft und ausgewählt werden. Die Zeit und Kosten für die Entwicklung können reduziert werden.

Mit dem Einsatz erfindungemäßer Sensorsysteme kann die Zeit zwischen Inspektionen vergrößert und der Ausfall von Betriebszeit verkürzt werden.

Bei Einsatz an kritischen Bauteilen oder an kritischen Bereichen von Bauteilen kann die Sicherheit erhöht werden.

Nachfolgend soll die Erfindung beispielhaft näher erläutert werden.

Dabei zeigen:
Figur 1 in einer Schnitt- und einer perspektivischen Darstellung ein Beispiel eines erfindungsgemäßen Sensorsystems vor dem Beginn von Ermüdungsuntersuchungen und
Figur 2 das in Figur 1 gezeigte Beispiel in einer Schnittdarstellung nach Durchführung von Ermüdungsuntersuchungen.

Bei dem hier gezeigten Beispiel ist auf einer Oberfläche eines Bauteils 4 aus Aluminium eine erste Schicht 1 vollflächig aufgebracht, die aus einkristallinem Aluminium gebildet ist.

Auf der ersten Schicht 1 ist eine zweite elektrisch isolierende Schicht 2 aus einem elektrisch nicht leitenden Polymer ausgebildet. Auf dieser ist als dritte Schicht 3 eine Polymerschicht aus elektrisch leitendem und dotiertem Polyanilin ausgebildet und zweidimensional mit einem Laser-Photonen-Prozess strukturiert worden, dabei erfolgte eine kontrollierte Polymerisation und es wurde ein vielfach verzweigter elektrischer Stromkreis mit der dritten Schicht gebildet, der einen sehr kleinen elektrischen Widerstand aufweist.

Außerdem ist in der perspektivischen Darstellung die Struktur der dritten Schicht 3 an der Oberfläche erkennbar.

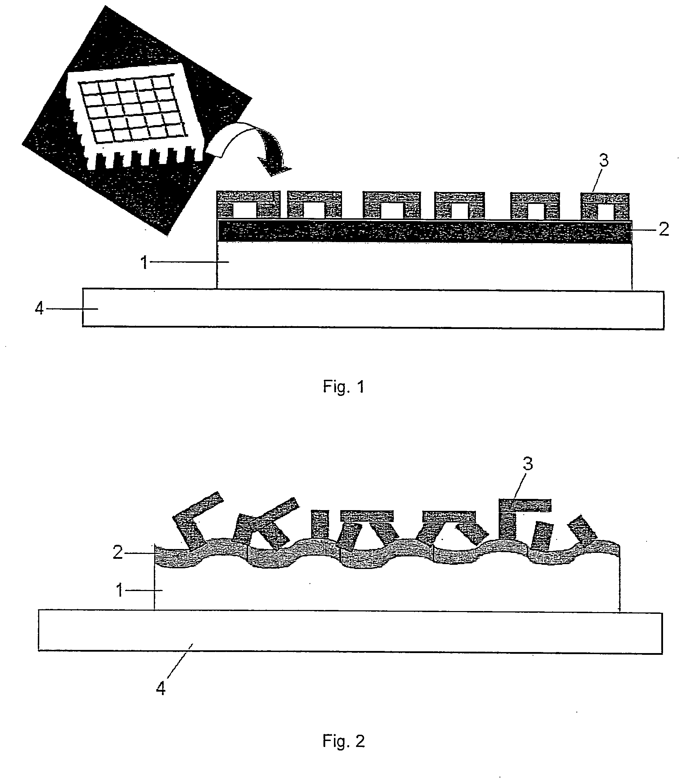

Durch die Wechselbeanspruchung bei Ermüdungsuntersuchungen bilden sich in der aus dem einkristallinen Aluminium gebildeten ersten Schicht 1 komplexe Mikro-Mesostrukturen aus, die partiell zur Zerstörung der elektrisch leitenden Verbindungen in der strukturierten dritten Schicht 3 führen. Dies ist nach erfolgter Ermüdungsschädigung in Figur 2 dargestellt.

Infolgedessen erhöht sich der integrale elektrische Widerstand der dritten Schicht 3, was als Maß für den Ermüdungszustand dient. Eine vergleichbare Quantifizierung kann durch eine Kalibrierung ermittelter elektrischer Widerstandswerte mit ermittelter Ermüdung, die in der ersten schicht 1 aufgetreten ist, erreicht werden.

## Patentansprüche

1. Sensorsystem zur Bestimmung der Ermüdung an metallischen Bauteilen, das mit einem mehrschichtigen Aufbau an einem Bauteil (4) befestigt ist; dabei eine erste aus einkristallinem Metall gebildete Schicht (1) unmittelbar stoffschlüssig auf einer Oberfläche des Bauteils (4) vollflächig befestigt ist,
auf der ersten Schicht (1) eine zweite elektrisch isolierende Polymerschicht (3) aufgebracht ist; und auf der zweiten Schicht eine dritte sensitive oder Sensorelemente enthaltende Schicht (3) aufgebracht ist; wobei
die dritte Schicht(3) mit einer aus unterschiedlichen elektrisch leitenden oder halbleitenden Polymeren gebildeten Matrix gebildet ist oder
in der dritten Schicht (3) vorhandene Sensorelemente ausgewählt sind aus Wirbelstromsensoren, kapazitiven Sensoren, induktiven Sensoren, Wandlern und detektierenden Sensoren für Ultraschalloberflächenwellen, optischen Sensoren und piezoelektrischen Sensoren
und oberhalb der dritten Schicht (3) Kontakte zu in dieser Schicht eingebetteten Sensorelementen sowie Anschlusskontakte für eine externe Messsignalerfassung und -auswertung ausgebildet sind, so dass Messsignale oder auch Steuersignale für in der dritten Schicht (3) enthaltene sensitive Elemente oder Sensorelemente an oder von einer elektronische(n) Auswerte- und Steuereinheit übertragbar sind.

2. Sensorsystem nach Anspruch 1 oder 2, **dadurch gekennzeichnet, dass** die erste Schicht (1) aus einkristallinem Aluminium oder dem Metall, aus dem das Bauteil (4) gebildet ist, gebildet ist.

3. Sensorsystem nach einem der vorhergehenden Ansprüche, **dadurch gekennzeichnet, dass** die zweite Schicht (2) einen vorgebbaren Abstand zur dritten Schicht (3) ausbildet.

4. Sensorsystem nach einem der vorhergehenden Ansprüche, **dadurch gekennzeichnet, dass** die in der dritten Schicht (3) enthaltenen sensitiven Elemente extern ansteuerbar sind.

5. Sensorsystem nach einem der vorhergehenden Ansprüche, **dadurch gekennzeichnet, dass** in der dritten Schicht (3) mehrere Sensorelemente lokal definiert angeordnet und an Kontakte der dritten Schicht (3) angeschlossen sind.

6. Sensorsystem nach einem der vorhergehenden Ansprüche, **dadurch gekennzeichnet, dass** in der dritten Schicht (3) Wirbelstromfoliensensoren vorhanden sind.

7. Sensorsystem nach einem der vorhergehenden Ansprüche, **dadurch gekennzeichnet, dass** mindestens ein kapazitiver Sensor in Form eines über Kontakte ansteuerbaren aus Leiterbahnen gebildeten Gitters ausgebildet ist.

8. Sensorsystem nach Anspruch 9, **dadurch gekennzeichnet, dass** mindestens ein kapazitiver Sensor in einem elastisch verformbaren Polymer eingebettet ist.

9. Sensorsystem nach einem der vorhergehenden Ansprüche, **dadurch gekennzeichnet, dass** mit piezosensitiven Sensoren oder mit Piezofasern gebildeten Sensoren eine Signalmodulation durchführbar ist.

10. Sensorsystem nach einem der vorhergehenden Ansprüche, **dadurch gekennzeichnet, dass** Sensorelemente einzeln und selektiv ansteuerbar und/oder deren Messsignale auslesbar sind.

11. Sensorsystem nach einem der vorhergehenden Ansprüche, **dadurch gekennzeichnet, dass** ein Bündel optischer Fasern, als Sensorelemente, mit ihren Stirnflächen auf die Oberfläche der ersten schicht (1), zur Erfassung der jeweiligen lokalen Lichtstreuung, gerichtet sind.

12. Sensorsystem nach einem der vorhergehenden Ansprüche, **dadurch gekennzeichnet, dass** die dritte Schicht (3) eine strukturierte Polymerschicht ist.

13. Sensorsystem nach einem der vorhergehenden Ansprüche, **dadurch gekennzeichnet, dass** die die dritte Schicht (3) aus oder mit dotiertem Polypyrrol, Polyanilin, Polythiophen oder Poly(para-phenylen-vinylen) gebildet ist.

## Claims

1. A sensor system for determining the fatigue of metallic components that is fastened to a component (4) by a multilayer structure; in which a first layer (1) formed from monocrystalline metal is fastened directly with material continuity to a surface of the component (4) over its full surface;
a second electrically insulating polymer layer (3) is applied to the first layer (1); and
a third sensitive layer or a layer (3) containing sensor elements is applied to the second layer, wherein
the third layer (3) is formed by a matrix formed from different electrically conductive or semiconductive polymers; or
sensor elements present in the third layer (3) are selected from eddy current sensors, capacitive sensors, inductive sensors, transducers, and detecting sensors for ultrasound surface waves, optical sensors and piezoelectric sensors and contacts to sensor elements embedded in said third layer (3) and connection contacts for an external measurement signal detection and evaluation are formed above said third layer so that measurement signals or also control signals for sensitive elements or sensor elements contained in said third layer (3) can be transmitted to or from an electronic evaluation and control unit.

2. A sensor system in accordance with claim 1 or claim 2, **characterized in that** the first layer (1) is formed from monocrystalline aluminum or from the metal from which the component (4) is formed.

3. A sensor system in accordance with one of the preceding claims, **characterized in that** the second layer (2) forms a predefinable spacing from the third layer (3).

4. A sensor system in accordance with one of the preceding claims, **characterized in that** the sensitive elements contained in the third layer (3) are externally controllable.

5. A sensor system in accordance with one of the preceding claims, **characterized in that** a plurality of sensor elements are arranged in a locally defined manner in the third layer (3) and are connected to contacts of the third layer (3).

6. A sensor system in accordance with one of the preceding claims, **characterized in that** eddy current foil sensors are present in the third layer (3).

7. A sensor system in accordance with one of the preceding claims, **characterized in that** at least one capacitive sensor is configured in the form of a grid formed from conductor tracks controllable via contacts.

8. A sensor system in accordance with claim 9, **characterized in that** at least one capacitive sensor is embedded in an elastically deformable polymer.

9. A sensor system in accordance with one of the preceding claims, **characterized in that** a signal modulation can be carried out using piezosensitive sensors or using sensor formed with piezo fibers.

10. A sensor system in accordance with one of the preceding claims, **characterized in that** sensor elements are controllable individually and selectively and/or their measurement signals can be read out.

11. A sensor system in accordance with one of the preceding claims, **characterized in that** the front surfaces of a bundle of optical fibers, as sensor elements, are directed to the surface of the first layer (1) for detecting the respective local light scattering.

12. A sensor system in accordance with one of the preceding claims, **characterized in that** the third layer (3) is a structured polymer layer.

13. A sensor system in accordance with one of the preceding claims, **characterized in that** the third layer (3) is formed from or using doped polypyrrole, polyaniline, poythiopene, or poly(para-phenylene-vinylene).

## Revendications

1. Système de capteur pour la détermination de la fatigue de pièces métalliques, qui est fixé avec une structure multicouche à un composant (4), une couche (1) constituée d'un métal monocristallin étant fixée directement par liaison de matière sur une surface du composant (4) sur toute sa surface,
sur la première couche (1) une deuxième couche polymère (3) électriquement isolante étant appliquée ;
et
sur la deuxième couche, une troisième couche (3) sensitif ou contenant des éléments capteurs étant appliquée ;
la troisième couche (3) étant constituée d'une matrice composée de différents polymères électro-conducteurs ou semi-conducteurs
ou
dans la troisième couche (3), les éléments capteurs présents sont sélectionnés parmi des capteurs de courants de Foucault, des capteurs capacitifs, des capteurs inductifs, des convertisseurs et des capteurs de détection pour les ondes ultrasonores superficielles, des capteurs optiques et des capteurs piézoélectriques,
et au-dessus de la troisième couche (3) sont prévus des contacts avec les éléments capteurs intégrés dans cette couche ainsi que des contacts de raccordement pour une détection et une analyse de signal de mesure, de façon à ce que les signaux de mesure ainsi que les signaux de commande pour les éléments sensitifs ou les éléments capteurs contenus dans la troisième couche (3) puissent être transmis à ou par une unité d'analyse et de commande électronique.

2. Système de capteur selon la revendication 1 ou 2, **caractérisé en ce que** la première couche (1) est constitué d'aluminium monocristallin ou du métal dont est constitué le composant (4).

3. Système de capteur selon l'une des revendications précédentes, **caractérisé en ce que** la deuxième couche (2) présente une distance, pouvant être prédéterminée, par rapport à la troisième couche (3).

4. Système de capteur selon l'une des revendications précédentes, **caractérisé en ce que** les éléments sensitifs contenus dans la troisième couche (3) peuvent être commandés de l'extérieur.

5. Système de capteur selon l'une des revendications précédentes, **caractérisé en ce que**, dans la troisième couche (3), sont disposés plusieurs éléments capteurs de manière localement définie et sont raccordés à des contacts de la troisième couche (3).

6. Système de capteur selon l'une des revendications précédentes, **caractérisé en ce que**, dans la troisième couche (3), se trouvent des capteurs de courants de Foucault à films.

7. Système de capteur selon l'une des revendications précédentes, **caractérisé en ce qu'**au moins un capteur capacitif est réalisé sous la forme d'une grille contrôlable par l'intermédiaire de contacts et constituée de pistes conductrices.

8. Système de capteur selon la revendication 9, **caractérisé en ce qu'**au moins un capteur capacitif est intégré dans un polymère déformable élastiquement.

9. Système de capteur selon l'une des revendications précédentes, **caractérisé en ce qu'**une modulation de signaux peut être effectuée avec des capteurs piézosensitifs ou avec des capteurs constitués de fibres piézoélectriques.

10. Système de capteur selon l'une des revendications précédentes, **caractérisé en ce que** les éléments capteurs peuvent être contrôlés et/ou leurs signaux de mesure peuvent être lus individuellement et de manière sélective.

11. Système de capteur selon l'une des revendications précédentes, **caractérisé en ce qu'**un faisceau de fibres optiques, en tant qu'éléments capteurs, sont orientées, avec leurs faces frontales, vers la surface de la première couche (1), pour la mesure de la diffusion lumineuse locale.

12. Système de capteur selon l'une des revendications précédentes, **caractérisé en ce que** la troisième couche (3) est une couche de polymère structurée.

13. Système de capteur selon l'une des revendications précédentes, **caractérisé en ce que** la troisième couche (3) est constituée de polypyrrol, de polyaniline, de polythiophène ou de poly(para-phénylène-vinylène) dopé.
